# EUROPEAN PATENT SPECIFICATION

(11) **EP 3 917 769 B1**
(45) Date of publication and mention of the grant of the patent: **12.07.2023**
(21) Application number: 20717937.5
(22) Date of filing: 31.01.2020
(51) Int. Cl.: B32B 3/20, A63C 5/12, B32B 3/28, B32B 3/08, B32B 3/26, B32B 3/12, B32B 5/02, B32B 5/18, B32B 15/04, B32B 15/18, B32B 15/20, B32B 21/00, B32B 25/00, B32B 27/30, B32B 27/32, B32B 27/40

(54) **SLIDING BOARD WITH CORRUGATED MEDIUMS**
GLEITBRETT MIT GEWELLTEN MEDIEN
PLANCHE DE GLISSE À NOYAU CREUX

(30) Priority: 01.02.2019 US 201962799760 P; 01.02.2019 US 201962799761 P; 01.02.2019 US 201962799763 P; 10.02.2019 US 201962803517 P; 01.05.2019 US 201962841265 P; 01.05.2019 US 201962841266 P
(43) Date of publication of application: 08.12.2021
(73) Proprietor: PDA Ecolab, SAS, 38240 Meylan (FR)
(72) Inventor: JOHNSON, Lance, 38240 Meylan (FR)
(74) Representative: Cabinet Beaumont
(86) International application number: PCT/IB2020/000094
(87) International publication number: WO 2020/157580

(56) References cited:
- DE-A1- 3 606 569
- US-A- 3 374 001
- US-A- 4 647 063

## Description

### CROSS REFERENCE TO RELATED APPLICATIONS

This application claims the benefit of U.S. Provisional Application No. 62/799,760, filed February 1, 2019, U.S. Provisional Application No. 62/799,761, filed February 1, 2019, U.S. Provisional Application No. 62/799,763, filed February 1, 2019, U.S. Provisional Application No. 62/803,517, filed February 10, 2019, U.S. Provisional Application No. 62/841,265, filed May 1, 2019, and U.S. Provisional Application No. 62/841,266, filed May 1, 2019.

### BACKGROUND

Known skis and other sliding boards (e.g., snowboards) include cores that provide the sliding boards with their general structure, shape, and performance characteristics. Sliding boards are often made from wood because it is relatively abundant and easy to work with. However, known methods and systems for making sliding boards including wooden cores create significant waste. For example, when a ski core is made from a blank, typically more than 60% of the blank ends up being discarded. DE3606569, US4647063 and US3374001 disclose the use of a corrugated medium as core layer.

### SUMMARY

Aspects of the disclosure enable a sliding board to be produced in an efficient, effective, and environmentally-friendly manner. In one aspect, a method is provided for producing a sliding board. The method includes bonding one or more solid components with one or more enhanced structural sections to produce a core layer. A first enhanced structural section of the enhanced structural sections includes a corrugated medium comprising a plurality of flutes extending laterally across a width of the core layer. The core layer is extended between a first layer and a second layer. The first layer and/or the second layer are moved toward the core layer.

In another aspect, a sliding board is provided. The sliding board includes an upper layer, a lower layer, and a core layer between the upper layer and the lower layer. The core layer includes one or more solid components and one or more enhanced structural sections bonded to the solid components. A first enhanced structural section includes a corrugated medium, wherein the corrugated medium comprises a plurality of flutes extending laterally across a width of the core layer, An upper surface of the core layer is directly coupled to a lower surface of the upper layer, and a lower surface of the core layer is directly coupled to an upper surface of the lower layer.

### BRIEF DESCRIPTION OF THE FIGURES

FIG. 1 shows a block diagram of an example sliding board including a lower layer, a core layer, and an upper layer.
FIG. 2 shows an exploded view of the sliding board shown in FIG. 1.
FIG. 3 shows a top view of an example sliding board layer, such as the core layer shown in FIG. 1.
FIG. 4 shows a perspective view of an example solid component that may be in a sliding board layer, such as the core layer shown in FIG. 3.
FIGS. 5-13 shows side view of example enhanced structural sections that may be in a sliding board layer, such as the core layer shown in FIG. 3.
FIGS. 14-28 show schematic cross-sectional views of example core assemblies including various sections, such as the solid component shown in FIG. 4 and one or more of the enhanced structural sections shown in FIGS. 5-13.
FIGS. 29-41 show various views of example core layers including various core assemblies, such as the core assemblies shown in FIGS. 14-28.
FIG. 42 shows a block flow diagram of an example method for producing a sliding board, such as the sliding board shown in FIG. 1.

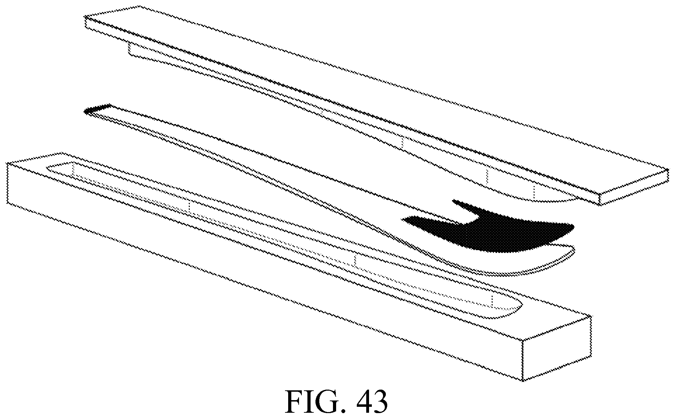

FIG. 43 shows a perspective view of an example mold that may be used to produce a sliding board, such as the sliding board shown in FIG. 1

Like numbers in the drawings refer to similar elements.

### DETAILED DESCRIPTION

The subject matter herein relates to sliding boards (e.g. skis, snowboards) and, more particularly, to producing sliding boards including one or more enhanced structural sections. To reduce the carbon impact of snow sports, examples of the disclosure utilize rapidly-renewable materials, reduce waste in fabrication, and reduce the overall consumption of raw materials. Examples described herein include a core structure including natural-fiber composite elements to increase the stiffness-to-weight ratio of the sliding board, while also reducing the amount of wood consumption and wood waste in the preparation of the core.

Example sliding boards include an upper layer, a lower layer, and a core layer between the upper layer and lower layer. The core layer includes one or more solid components and one or more enhanced structural sections bonded to the solid components. A first enhanced structural section includes a corrugated medium. An upper surface of the core layer is directly coupled to a lower surface of the upper layer, and a lower surface of the core layer is directly coupled to an upper surface of the lower layer. The core layer may be made from a wide variety of materials, including wood, foam/plastic, aramid honeycomb, and/or laminated fiber-reinforced composite materials. The core layer may be pre-formed and added to the construction of the sliding board as a shaped piece. Examples of the disclosure include replacing sections of wood with sections of composite materials with little or no milling or removal of wood. In this manner, sliding boards may be customized based on desired performance characteristics (e.g., lightweight, stable, responsive) in a sustainable, environmentally-friendly manner.

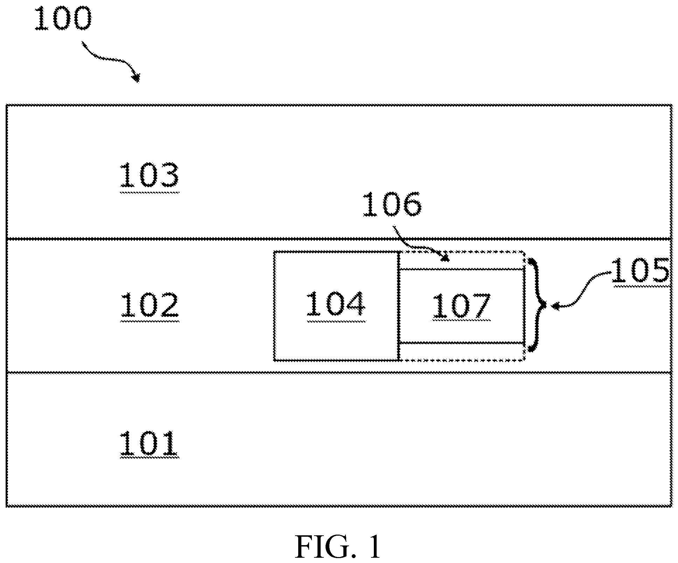

FIG. 1 shows a sliding board 100 divided vertically into a plurality of layers, including a lower layer 101 (e.g., a sliding base), a core layer 102, and an upper layer 103 (e.g., a reinforcement layer). As shown in FIG. 1, the core layer 102 extends generally horizontally between the lower layer 101 and the upper layer 103. The core layer 102 includes one or more solid components 104 and/or enhanced structural sections 105. The solid components 104 are solid or substantially solid. Each enhanced structural section 105 (e.g., a first enhanced structural section) includes a corrugated medium 107 and one or more sheets 106 (e.g., linerboards) coupled to the corrugated medium 107.

The lower layer 101, core layer 102, and/or upper layer 103 provide structure, shape, and/or performance characteristics to the sliding board 100. Materials used to make the lower layer 101, core layer 102, and/or upper layer 103 may be selected, for example, based on one or more desired performance characteristics of the sliding board 100. Example materials used to make the lower layer 101, core layer 102, and/or upper layer 103 include, without limitation, woods, metals (e.g., steel, stainless steel, titanium, aluminum, TITANAL aluminum alloy), plastics (e.g., acrylonitrile butadiene styrene (ABS), polyethylene (PE), polyurethane (PU)), elastomers, and/or composite materials (e.g., fiberglass, carbon fiber, aramid fiber, basalt fiber, boron fiber, polyethylene fiber, bamboo fiber, flax fiber, ZYEX fiber, TWARON fiber, SPECTRA fiber, DYNEEMA fiber) in any form (e.g., plate, fabric, mesh, foam, honeycomb). (TITANAL is a trademark of Austria Metall GmbH of Braunau am Inn, Austria; ZYEX is a trademark of Victrex Manufacturing Limited of Lancashire, United Kingdom; TWARON is a trademark of Teijin Aramid B.V. of Amhem, Netherlands; SPECTRA is a trademark of Honeywell International Inc. of Morris Plains, New Jersey; DYNEEMA is a trademark of DSM IP Assets B.V. of Heerlen, Netherlands). Based on the design of a sliding board 100 and its intended use, additional reinforcement may be added between the lower layer 101, core layer 102, and/or upper layer 103. In some examples, the lower layer 101, core layer 102, and/or upper layer 103 are laminated together using an epoxy or resin.

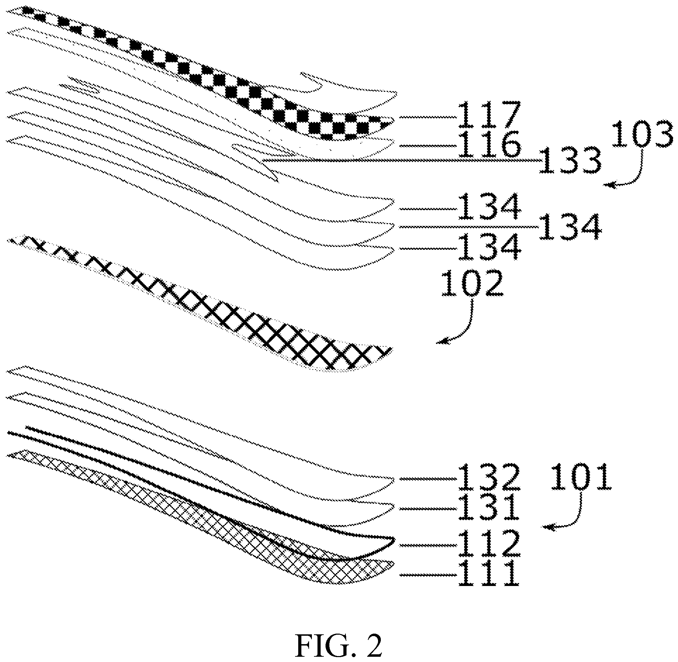

As shown in FIG. 2, the lower layer 101 may include a base 111 and an edge 112 extending at least partially about the base 111. The base 111 may include a plurality of pores defined therein for accepting wax. In some examples, the lower layer 101 includes a sheet 131 extending over the base 111 and a ply 132 extending over the sheet 131. In some examples, the base 111 is made from polyethylene, acrylonitrile butadiene and/or styrene, the edge 112 is made from steel, stainless steel, and/or aluminum, the sheet 131 is made from aluminum or TITANAL aluminum alloy, and the ply 132 is made from basalt fibers. Alternatively, the base 111, edge 112, sheet 131, and/or ply 132 may be made from any combination of materials that enable the lower layer 101 to function as described herein. The edge 112 may be coupled to the base 111 using one or more coupling mechanisms, such as T-shaped inserts. In some examples, the lower layer 101 includes one or more elastomers along the steel edge 112 to facilitate reducing or preventing delamination of the lower layer 101.

As shown in FIG. 2, the core layer 102 may be pre-formed as a core assembly including one or more solid components 104 and/or enhanced structural sections 105. That is, the one or more solid components 104 and/or enhanced structural sections 105 may be bonded together prior to being coupled to the lower layer 101 and/or upper layer 103. Alternatively, at least a portion of the core layer 102 may be formed with the lower layer 101 and/or upper layer 103.

As shown in FIG. 2, the upper layer 103 may include a sublayer 116 (e.g., graphic layer) and a topsheet 117 (e.g., protective layer). The upper layer 103 includes the top face, which may include structural and/or cosmetic elements, as well as a solid base to attach bindings. The sublayer 116 may be configured to moderate flex and rebound, provide vibration damping, and/or enhance durability, structure, and/or binding retention, and/or the topsheet 117 may be configured to protect the sublayer 116. In some examples, the upper layer 103 includes a binding sheet 133 extending under the sublayer 116, and one or more plies 134 extending under the binding sheet 133. In some examples, the sublayer 116 is made from a fiber-reinforced fabric, a metal sheet, a metal mesh, wood, and/or plastic, the topsheet 117 is made from a fiber-reinforced fabric, a wood veneer, and/or plastic, the binding sheet 133 is made from aluminum and/or TITANAL aluminum alloy, and/or the one or more plies 134 are made from bast fibers and/or basalt fibers. For example, as shown in FIG. 2, the lower ply 134 of the upper layer 103 may be a basalt ply, and the two plies 134 extending over the lower ply 134 may be bast plies. Alternatively, the sublayer 116, topsheet 117, binding sheet 133, and/or plies 134 may be made from any combination of materials that enable the upper layer 103 to function as described herein.

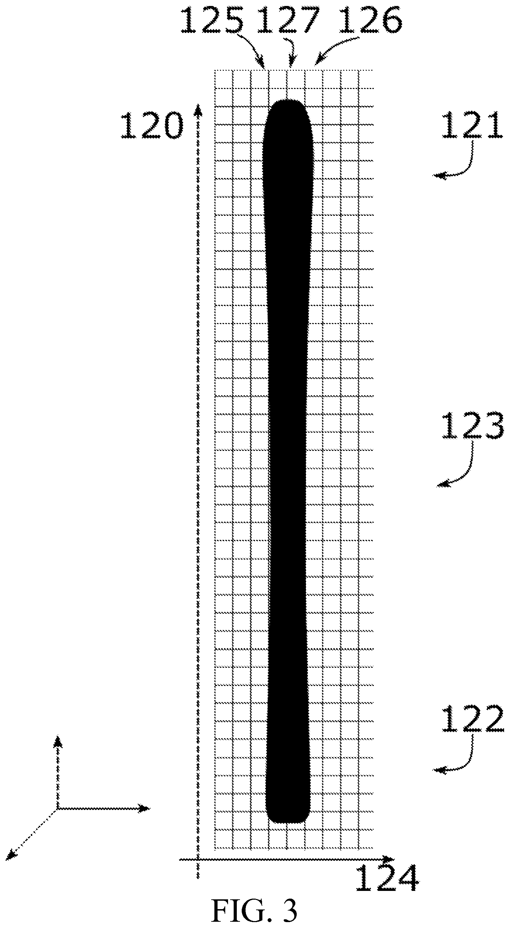

FIG. 3 shows a core layer 102. The core layer 102 may be divided along a longitudinal axis 120 into a plurality of longitudinal zones. For example, the core layer 102 may include a tip zone 121, a tail zone 122 longitudinally opposite the tip zone 121, and a middle zone 123 between the tip zone 121 and tail zone 122. In some examples, the tip zone 121, middle zone 123, and/or tail zone 122 include a plurality of lateral subzones or portions. That is, the core layer 102 may first be divided along the longitudinal axis 120 and then one or more longitudinal zones may be subdivided along a lateral axis 124 into one or more lateral portions. For example, the tip zone 121 may include a first set of lateral portions, the tail zone 122 may include a second set of lateral portions, and the middle zone 123 may include a third set of lateral portions.

Additionally or alternatively, the core layer 102 may be divided along the lateral axis 124 into a plurality of lateral zones. For example, the core layer 102 may include a left zone 125, a right zone 126 longitudinally opposite the left zone 125, and a center zone 127 between the left zone 125 and right zone 126. In some examples, the left zone 125, right zone 126, and/or center zone 127 include a plurality of longitudinal portions. That is, the core layer 102 may first be divided along the lateral axis 124 and then one or more lateral zones may be subdivided along the longitudinal axis 120 into one or more longitudinal portions. For example, the left zone 125 may include a first set of longitudinal portions, the right zone 126 may include a second set of longitudinal portions, and the center zone 127 may include a third set of longitudinal portions. Any of the longitudinal zones, lateral zones, lateral portions, and/or longitudinal zones may include a solid component 104 and/or enhanced structural section 105 (e.g., first enhanced structural section).

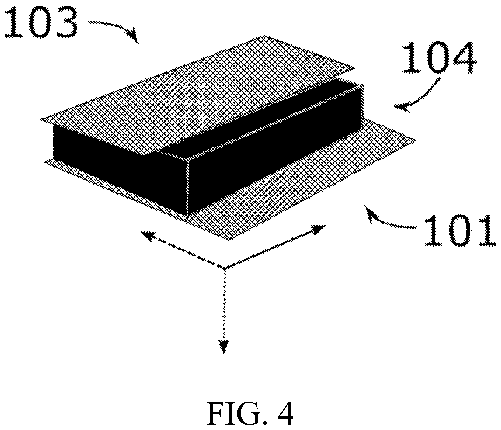

FIG. 4 shows a solid component 104 between the lower layer 101 and the upper layer 103. The solid component 104 is solid or substantially solid. The solid component 104 may include or be fabricated from, for example, a wood material (e.g. hardwood, softwood, laminated wood, balsa), cork, foam (e.g., closed cell, open cell), a metal material, a rubber material, an elastomer material, and/or a plastic material. In some examples, the solid component 104 includes a fiber-reinforced fabric, a metal sheet, a metal mesh, and/or wood fibers (e.g., bamboo, balsa) in a vertical lamination with unidirectional basalt-fiber tape extending therebetween.

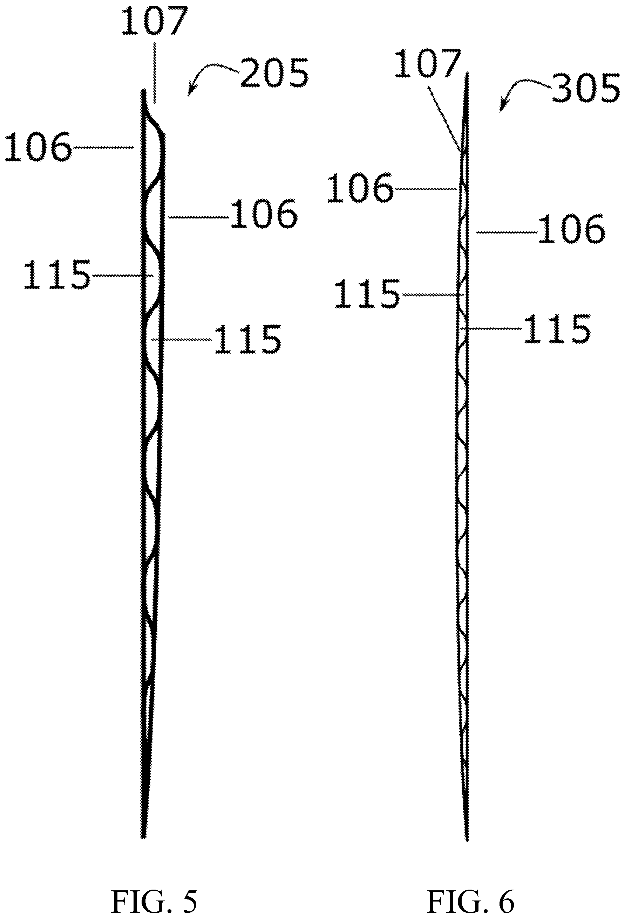

FIGS. 5-9 show various enhanced structural sections 205, 305, 405, 505, and 605 (enhanced structural sections 105) including a corrugated medium 107 and one or more sheets 106 coupled to the corrugated medium 107. The corrugated medium 107 includes a plurality of flutes 115. The flutes 115 may extend generally upward from an upper surface of the lower sheet 106 and/or generally downward from a lower surface of the upper sheet 106. In some examples, the corrugated medium 107 and/or sheets 106 include or are fabricated from one or more layers of fiber-reinforced fabric, metal, wood, and/or plastic. Alternatively, the corrugated medium 107 and/or sheets 106 may be made from any combination of materials that enable the enhanced structural section 105 to function as described herein.

FIGS. 5 and 6 show enhanced structural sections 205 and 305 each including a single wall corrugated element including a corrugated medium 107 between a pair of sheets 106. As shown in FIGS. 5 and 6, single wall corrugated elements may include an upper sheet 106 defining an upper surface of the enhanced structural section 105 and a lower sheet 106 defining a lower surface of the enhanced structural section 105. In some examples, the sheets 106 extend generally parallel to each other. Alternatively, a sheet 106 may extend in any direction that enables the enhanced structural section as described herein. For example, the sheets 106 shown in FIG. 5 is generally straight or linear, whereas one sheet 106 shown in FIG. 6 (e.g., lower sheet) is generally straight or linear while the other sheet 106 shown in FIG. 6 (e.g., upper sheet) is curved or arced.

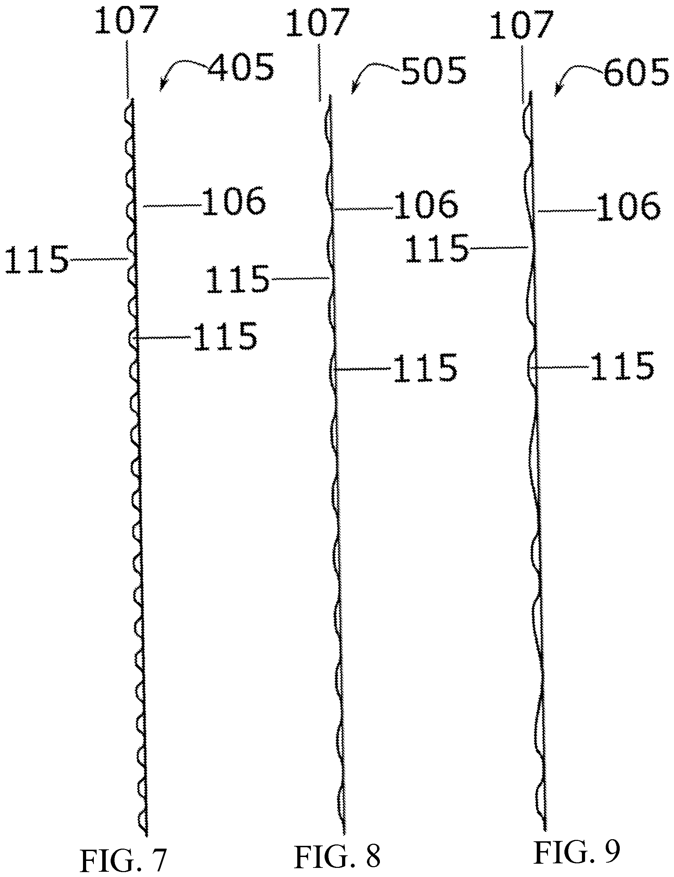

FIGS. 7-9 show enhanced structural sections 405, 505, and 605 each including a single face corrugated element including a corrugated medium 107 coupled to a single sheet 106. As shown in FIGS. 7-9, single face corrugated elements may include an upper sheet 106 defining an upper surface of the enhanced structural section 105 or a lower sheet 106 defining a lower surface of the enhanced structural section 105. In some examples, the flutes 115 of the corrugated medium 107 are generally regular or consistent in shape and/or size. For example, the flutes 115 shown in FIG. 7 are relatively narrow and densely arranged (e.g., to increase rigidity of the enhanced structural section 405). For another example, the flutes 115 shown in FIG. 8 are relatively wide and sparsely arranged (e.g., to increase flexibility of the enhanced structural section 505). Alternatively, flutes 115 may have any shape, size, and/or configuration that enables the enhanced structural section 105 to function as described herein. For example, the flutes 115 shown in FIG. 9 are irregular in size, shape, and grouping (e.g., to tune stiffness and/or rebound in specific areas of the enhanced structural section 605).

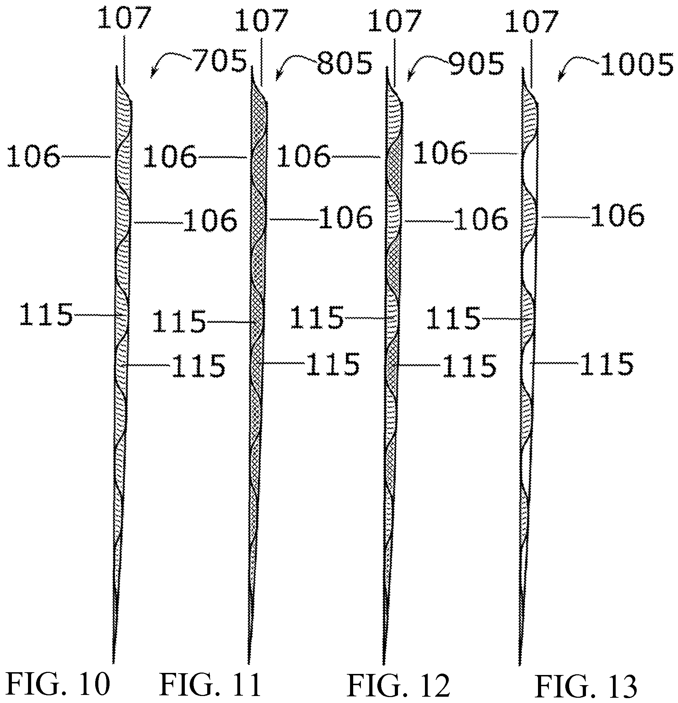

In some examples, the flutes 115 define a plurality of spaces therebetween. For example, the flutes 115 shown in FIGS. 7-9 are empty or open. Alternatively, one or more spaces may be plugged and/or filled using rubber, elastomer, cork, and/or any other material that enables the enhanced structural section 105 to function as described herein. FIG. 10 shows a plurality of spaces that are capped or plugged using a plurality of plugs. One or more plugs may be coupled to the corrugated medium 107 at or adjacent to a longitudinal end of one or more flutes 115 for plugging the spaces. Plugging may facilitate restricting or preventing accumulation of resin in the spaces. FIG. 11 shows a plurality of spaces that are filled. Filling may facilitate increasing a strength or durability of the enhanced structural section 105. FIG. 12 shows a first plurality of spaces that are capped or plugged, and a second plurality of spaces that are filled. The spaces shown in FIG. 12 are plugged and filled alternatingly. Alternatively, any space may be plugged and/or filled (or not) that enables the enhanced structural section 105 to function as described herein. For example, FIG. 13 shows a first plurality of spaces that are filled, and a second plurality of spaces that are empty or open. In other examples, the spaces defined between flutes 115 are variously capped, filled, or not capped or filled.

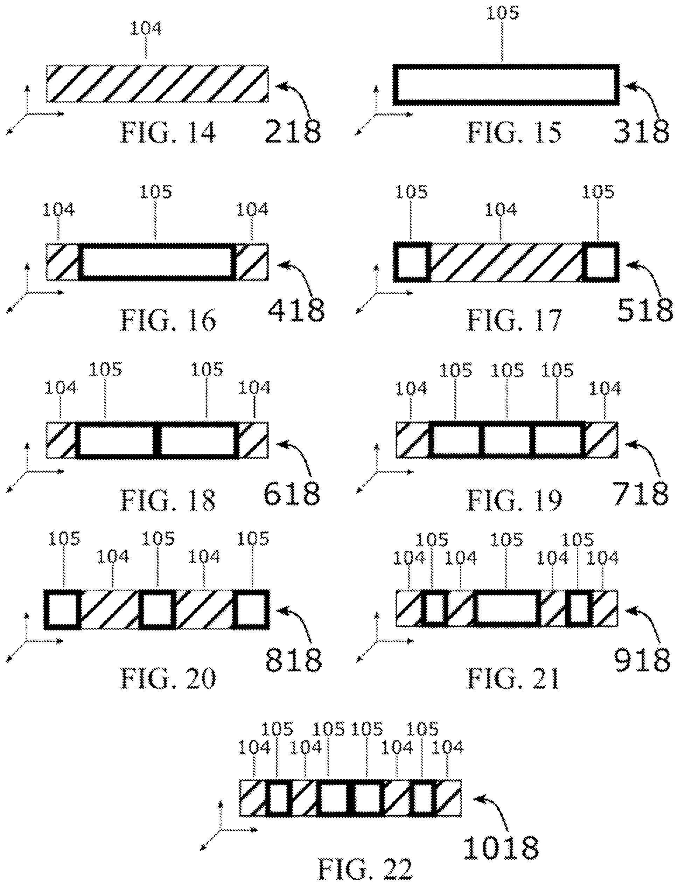

FIGS. 14-28 show example core assemblies 218, 318, 418, 518, 618, 718, 818, 918, 1018, 1118, 1218, 1318, 1418, 1518, and 1618 of solid components 104 and/or enhanced structural sections 105 that may be used to form core layer 102. In some examples, the core assemblies 218, 318, 418, 518, 618, 718, 818, 918, 1018, 1118, 1218, 1318, 1418, 1518, and 1618 show a lateral cross section view of the core layer 102, with varying divisions of the core layer 102 along the lateral axis 124 (shown in FIG. 3). For example, FIG. 14 shows a core assembly 218 including one or more solid components 104 spanning a width of the core layer 102, with no enhanced structural sections 105 (e.g., no corrugated medium 107) along the width of the core layer 102. FIG. 15 shows a core assembly 318 including a single enhanced structural section 105 (e.g., a single corrugated medium 107) spanning a width of the core layer 102, with no solid components 104. FIG. 16 shows a core assembly 418 including a single enhanced structural section 105 (e.g., a single corrugated medium 107) between a pair of solid components 104. FIG. 17 shows a core assembly 518 including one or more solid components 104 between a pair of enhanced structural sections 105 (e.g., two corrugated mediums 107). FIGS. 18 and 19 show core assemblies 618 and 718, respectively, including a plurality of adjacent enhanced structural sections 105 between a pair of solid components 104. The core layer 102 may include any quantity of adjacent enhanced structural sections 105 between a pair of solid components 104.

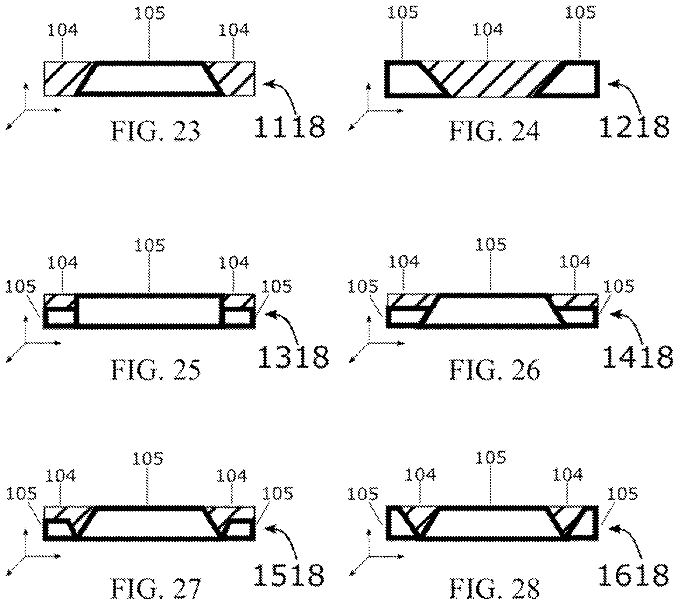

As shown in core assemblies 218, 318, 418, 518, 618, 718, 818, 918, 1018, 1118, and 1218 in FIGS. 14-24, respectively, the solid components 104 and enhanced structural sections 105 may be arranged in a single level or layer. Alternatively, as shown in core assemblies 1318, 1418, 1518, and 1618 in FIGS. 25-28, a solid component 104 and/or enhanced structural section 105 may be stacked or positioned on top of or below another section (e.g., solid component 104, enhanced structural section 105). As shown in core assemblies 218, 318, 418, 518, 618, 718, 818, 918, 1018, and 1318 in FIGS. 14-22 and 25, respectively, each sidewall of the solid components 104 and enhanced structural sections 105 may extend generally horizontally or vertically. Alternatively, as shown in core assemblies 1118, 1218, 1418, 1518, and 1618 in FIGS. 23, 24, and 26-28, one or more sidewalls of the solid components 104 and/or enhanced structural sections 105 may extend at an angle other than horizontal (e.g., 0°) or vertical (e.g., 90°). While core assemblies 218, 318, 418, 518, 618, 718, 818, 918, 1018, 1118, 1218, 1318, 1418, 1518, and 1618 have been shown, others are also envisaged. For example, while the core assemblies 218, 318, 418, 518, 618, 718, 818, 918, 1018, 1118, 1218, 1318, 1418, 1518, and 1618 have bilateral symmetry, the solid components 104 and/or enhanced structural sections 105 may be arranged asymmetrically. In some examples, core layers 102 for a pair of skis may employ complementary core assemblies (e.g., the left ski and right ski have mirroring core assemblies). Additionally or alternatively, while the sidewalls of the solid components 104 and enhanced structural sections 105 shown in FIGS. 14-28 are generally flat or planar, a solid component 104 and/or enhanced structural section 105 may include one or more sidewalls that are not planar (e.g., contoured, curved).

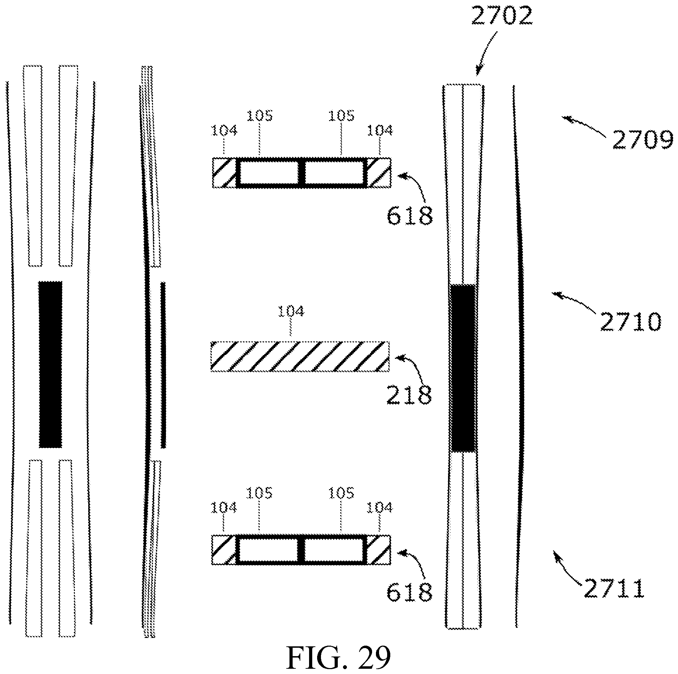

FIGS. 29-36 show example core layers 2702, 2802, 2902, 3002, 3102, 3202, 3302, and 3402 (e.g., core layer 102) each including a respective plurality of core assemblies extending along a length of the respective core layers 2702, 2802, 2902, 3002, 3102, 3202, 3302, and 3402. For example, FIG. 29 shows a core layer 2702 including a first plurality of adjacent enhanced structural sections 105 between a pair of solid components 104 spanning a width of the core layer 2702 (e.g., core assembly 618) in a tip zone 2709, one or more solid components 104 spanning a width of the core layer 2702 (e.g., core assembly 218) in a middle zone 2710, and a second plurality of adjacent enhanced structural sections 105 between a pair of solid components 104 (e.g., core assembly 618) in a tail zone 2711.

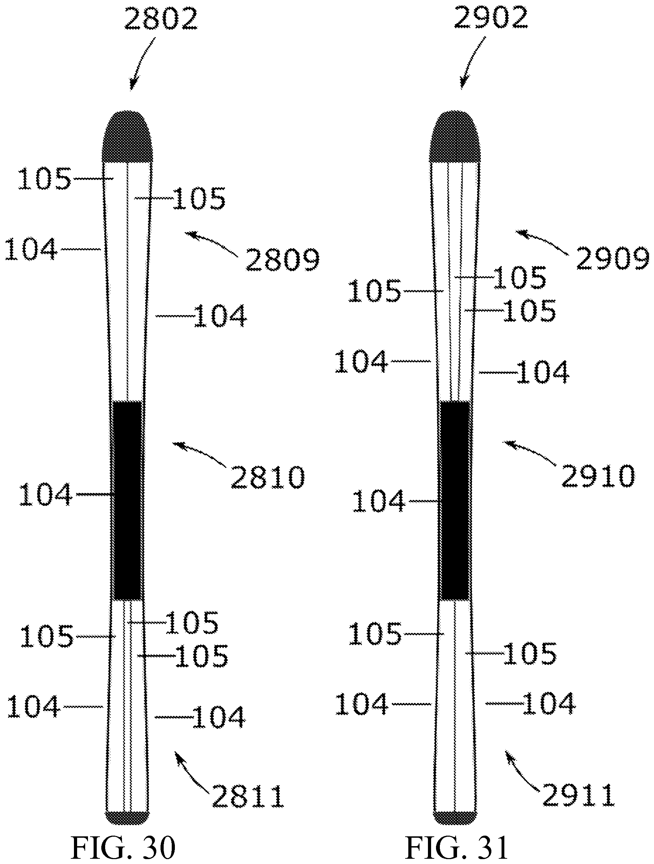

FIG. 30 shows a core layer 2802 including a first plurality of adjacent enhanced structural sections 105 between a pair of solid components 104 (e.g., core assembly 618) in a tip zone 2809, one or more solid components 104 spanning a width of the core layer 2802 (e.g., core assembly 218) in a middle zone 2810, and a second plurality of adjacent enhanced structural sections 105 between a pair of solid components 104 (e.g., core assembly 718) in a tail zone 2811. As shown in FIG. 30, the quantity of enhanced structural sections 105 in one zone (e.g., tip zone 1809) may be different from the quantity of enhanced structural sections 105 in another zone (e.g., tail zone 2811). A greater quantity of enhanced structural sections 105 in the tail zone 2811 may increase a responsiveness at the tail of the sliding board 100, for example.

FIG. 31 shows a core layer 2902 including a first plurality of adjacent enhanced structural sections 105 between a pair of solid components 104 (e.g., core assembly 718) in a tip zone 2909, one or more solid components 104 spanning a width of the core layer 2402 (e.g., core assembly 218) in a middle zone 2910, and a second plurality of adjacent enhanced structural sections 105 between a pair of solid components 104 (e.g., core assembly 618) in a tail zone 2911. As shown in FIG. 31, the quantity of enhanced structural sections 105 in one zone (e.g., tip zone 2909) may be different from the quantity of enhanced structural sections 105 in another zone (e.g., tail zone 2911). A greater quantity of enhanced structural sections 105 in the tip zone 2909 may increase a rebound damping at the tip of the sliding board 100, for example.

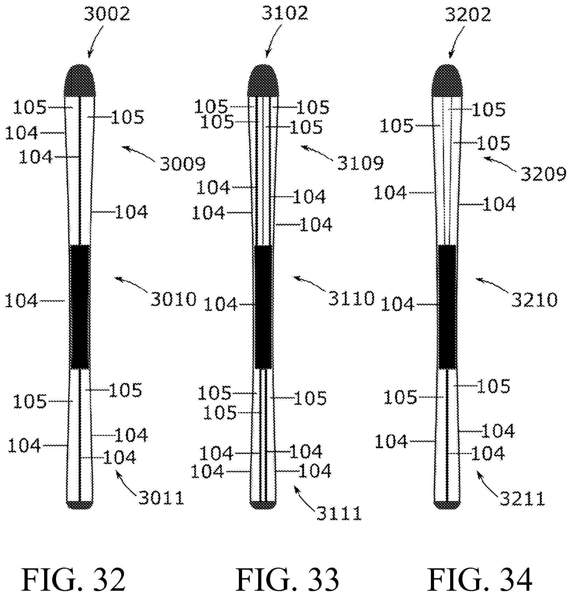

FIG. 32 shows a core layer 3002 including a first plurality of solid components 104 interleaved or alternating with a first plurality of enhanced structural sections 105 (e.g., core assembly 818) in a tip zone 3009, one or more solid components 104 spanning a width of the core layer 3002 (e.g., core assembly 218) in a middle zone 2910, and a second plurality of solid components 104 interleaved or alternating with a second plurality of enhanced structural sections 105 (e.g., core assembly 818) in the tail zone 3181.

FIG. 33 shows an core layer 3102 including a first pair of adjacent enhanced structural sections 105 between a first pair of solid components 104 between a second pair of enhanced structural sections 105 between a second pair of solid components 104 (e.g., core assembly 1008) in a tip zone 3109, one or more solid components 104 spanning a width of the core layer 3102 (e.g., core assembly 218) in a middle zone 3110, and a first plurality of solid components 104 interleaved or alternating with a first plurality of enhanced structural sections 105 (e.g., core assembly 918) in a tail zone 3111.

FIG. 34 shows an example core layer 3202 including a first plurality of adjacent enhanced structural sections 105 between a pair of solid components 104 (e.g., core assembly 718) in a tip zone 3209, one or more solid components 104 spanning a width of the core layer 3203 (e.g., core assembly 218) in a middle zone 3210, and a plurality of solid components 104 interleaved or alternating with a second plurality of enhanced structural sections 105 (e.g., core assembly 818) in a tail zone 3211.

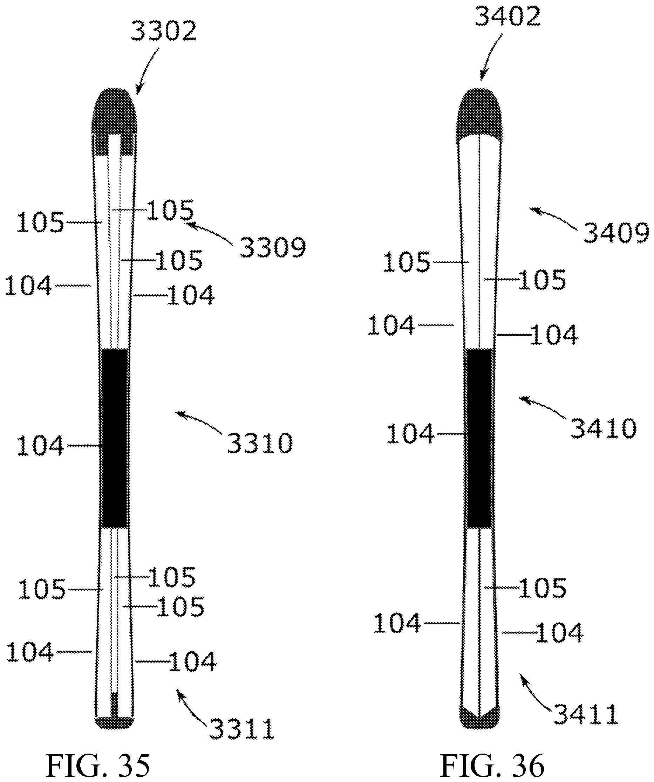

FIG. 35 shows a core layer 3302 including a first plurality of adjacent enhanced structural sections 105 between a pair of solid components 104 (e.g., core assembly 718) in a tip zone 3309, one or more solid components 104 spanning a width of the core layer 3302 (e.g., core assembly 218) in a middle zone 3310, and a second plurality of adjacent enhanced structural sections 105 between a pair of solid components 104 (e.g., core assembly 718) in a tail zone 3311. As shown in FIG. 35, the solid components 104 and/or enhanced structural sections 105 may have squared ends and inconsistent lengths (e.g., the left and right enhanced structural sections 105 in the tip zone 3309 are shorter than the center enhanced structural section 105 and the solid components 104, the center enhanced structural section 105 in the tail zone 3311 is shorter than the left and right enhanced structural sections 105 and the solid components 104).

FIG. 36 shows a core layer 3402 including a first plurality of adjacent enhanced structural sections 105 between a pair of solid components 104 (e.g., core assembly 618) in a tip zone 3409, one or more solid components 104 spanning a width of the core layer 3402 (e.g., core assembly 218) in a middle zone 3410, and a plurality of solid components 104 interleaved or alternating with a second plurality of enhanced structural sections 105 (e.g., core assembly 818) in a tail zone 3411. As shown in FIG. 36, the solid components 104 and/or enhanced structural sections 105 may have non-squared ends (e.g., curved, angled) and tapered lengths.

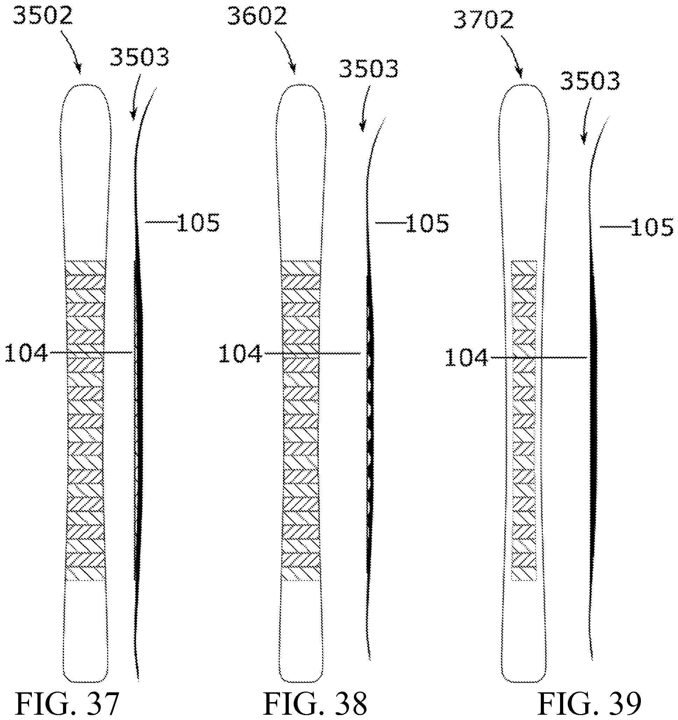

FIG. 37 shows an example core layer 3502 including a solid component 104 defining a channel at a lower face 3503 of the solid component 104. In some examples, the lower face 3503 is generally flat or planar. As shown in FIG. 37, the channel extends laterally across an entire width of the core layer 3502 at the middle zone 123 of the core layer 3502. Alternatively, the solid component 104 may define any number of channels in any surface and extending in any orientation that enables the core layer 3502 to function as described herein.

The core layer 3502 includes an enhanced structural section 105 within the channel at the lower face 3503 of the solid component 104. In some examples, the enhanced structural section 105 includes a single wall corrugated element including a corrugated medium 107 between a pair of sheets 106. The enhanced structural section 105 is positioned in the channel such that an upper surface of an upper sheet 106 of the single wall corrugated element is coupled to the lower face 3503 of the solid component 104. As shown in FIG. 37, the single wall corrugated element is oriented such that the flutes of the corrugated medium 107 extend generally laterally across the width of the core layer 3502.

FIG. 38 shows an example core layer 3602 including a solid component 104 defining a channel at a lower face 3503 of the solid component 104. In some examples, the solid component 104 includes a plurality of flutes at the lower face 3503 extending generally laterally across a width of the solid component 104. As shown in FIG. 38, the channel extends laterally across an entire width of the core layer 3602 at the middle zone 123 of the core layer 3602. Alternatively, the solid component 104 may define any number of channels in any surface and extending in any orientation that enables the core layer 3602 to function as described herein.

The core layer 3602 includes an enhanced structural section 105 within the channel at the lower face 3503 of the solid component 104. In some examples, the enhanced structural section 105 includes a single face corrugated element including a corrugated medium 107 coupled to a single sheet 106. The enhanced structural section 105 is positioned in the channel such that an upper surface of an upper sheet 106 of the single face corrugated element is coupled to the lower face 3503 of the solid component 104. As shown in FIG. 38, the single face corrugated element is oriented such that the flutes of the corrugated medium 107 extend generally laterally across the width of the core layer 3502 and/or engage or complement the flutes of the solid component 104.

FIG. 39 shows an example core layer 3702 including a solid component 104 defining a channel at a lower face 3503 of the solid component 104. In some examples, the solid component 104 includes a plurality of flutes at the lower face 3503 extending generally laterally across a width of the solid component 104. As shown in FIG. 39, the channel extends laterally across a width of the core layer 3702 at a center portion of the middle zone 123 between a left portion of the middle zone 123 and a right portion of the middle zone 123. Alternatively, the solid component 104 may define any number of channels in any surface and extending in any orientation that enables the core layer 3702 to function as described herein.

The core layer 3702 includes an enhanced structural section 105 within the channel at the lower face 3503 of the solid component 104. In some examples, the enhanced structural section 105 includes a single face corrugated element including a corrugated medium 107 coupled to a single sheet 106. The enhanced structural section 105 is positioned in the channel such that an upper surface of an upper sheet 106 of the single face corrugated element is coupled to the lower face 3503 of the solid component 104. As shown in FIG. 39, the single face corrugated element is oriented such that the flutes of the corrugated medium 107 extend generally laterally across the width of the core layer 3502 and/or engage or complement the flutes of the solid component 104. In some examples, the single sheet 106 extends across a width of the core layer 3702 at a center portion of the middle zone 123 between a left portion of the middle zone 123 and a right portion of the middle zone 123. Alternatively, the single sheet 106 may extend across an entire width of the core layer 3702 at the middle zone 123 of the core layer 3702.

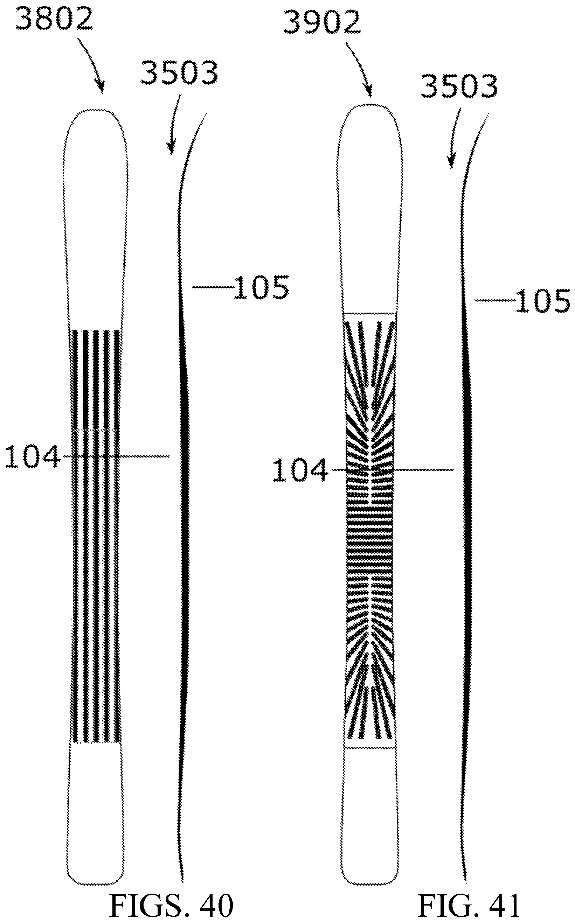

FIG. 40 is not part of the invention and shows an example core layer 3802 including a solid component 104 defining a channel at a lower face 3503 of the solid component 104. In some examples, the solid component 104 includes a plurality of flutes at the lower face 3503 extending generally longitudinally along a length of the core layer 3802 between a tip zone 109 of the core layer 3802 and a tail zone 122 of the core layer 3802. Alternatively, the lower face 3503 may be generally flat or planar. As shown in FIG. 40, the channel extends laterally across an entire width of the core layer 3802 at the middle zone 123 of the core layer 3802. Alternatively, the solid component 104 may define any number of channels in any surface and extending in any orientation that enables the core layer 3802 to function as described herein.

The core layer 3802 includes an enhanced structural section 105 within the channel at the lower face 3503 of the solid component 104. In some examples, the enhanced structural section 105 includes a single face corrugated element including a corrugated medium 107 coupled to a single sheet 106. The enhanced structural section 105 is positioned in the channel such that an upper surface of an upper sheet 106 of the single face corrugated element is coupled to the lower face 3503 of the solid component 104. As shown in FIG. 40, the single face corrugated element may be oriented such that the flutes of the corrugated medium 107 extend generally longitudinally across the length of the core layer 3802 between the tip zone 109 of the core layer 3802 and the tail zone 122 of the core layer 3802 and/or engage or complement the flutes of the solid component 104. Alternatively, the enhanced structural section 105 may include any type of corrugated element including flutes extending in any orientation that enables the core layer 3802 to function as described herein.

FIG. 41 shows an example core layer 3902 including a solid component 104 defining a channel at a lower face 3503 of the solid component 104. In some examples, the solid component 104 includes a plurality of flutes at the lower face 3503 extending in various directions. For example, a first set of flutes extend generally radially from a first focal line extending generally longitudinally at a forward area of the middle zone 123, a second set of flutes extend generally radially from a second focal line extending generally longitudinally at a rearward area of the middle zone 123, and a third set of flutes extend generally laterally across a width of the core layer 3502 at a middle section of the middle zone 123 between the forward section and the rearward section. Alternatively, one or more sections of the lower face 3503 may be generally flat or planar. As shown in FIG. 41, the channel extends laterally across an entire width of the core layer 3902 at the middle zone 123 of the core layer 3902. Alternatively, the solid component 104 may define any number of channels in any surface and extending in any orientation that enables the core layer 3902 to function as described herein.

The core layer 3902 includes an enhanced structural section 105 within the channel at the lower face 3503 of the solid component 104. In some examples, the enhanced structural section 3905 includes a single face corrugated element including a corrugated medium 107 coupled to a single sheet 106. The enhanced structural section 3905 is positioned in the channel such that an upper surface of an upper sheet 106 of the single face corrugated element is coupled to the lower face 3503 of the solid component 104. As shown in FIG. 41, the single face corrugated element may be oriented such that the flutes of the corrugated medium 107 extend in various directions and/or engage or complement the flutes of the solid component 104. Alternatively, the enhanced structural section 105 may include any type of corrugated element including flutes extending in any orientation that enables the core layer 3902 to function as described herein.

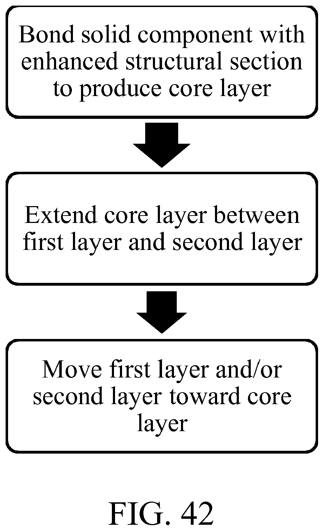

FIG. 42 shows operations for making or producing a sliding board (e.g., sliding board 100). The method includes bonding one or more solid components 104 with one or more enhanced structural sections 105 to produce a core layer 102. A first enhanced structural section 105 includes a corrugated medium 107. The core layer 102 is extended between a first component or layer (e.g., lower layer 101) and a second layer or layer (e.g., upper layer 103). Example core layers 102, as well as various core assemblies included in core layers 102, are shown in FIGS. 14-41.

The first layer and/or second layer may be moved toward the core layer 102 to decrease a distance between the first layer and the second layer. As the distance between the first layer and the second layer decreases, the core layer 102 may exert a reactive force outward toward the first layer and/or second layer. In some examples, a pressure-exerting element (shown, e.g., in FIG. 44) may be used to exert a force inward toward the first layer and/or second layer. Pressure-exerting elements that may be used to compress the first layer and/or second layer include, for example, an external mold, a ski press, and/or a vacuum-bagging system and curing oven.

In some examples, one or more other pressure-exerting elements are placed between a surface of the sliding board components (e.g., lower layer 101, upper layer 103) and an interior surface of the mold, and are in contact with both said surfaces. There, the other pressure-exerting elements apply inward pressure on the components and aid in compacting the layers. Examples of other pressure-exerting elements include, without limitation, bladders or other compositions or devices configured to provide a consistent, controlled pressure. For example, one or more bladders may be positioned between the lower surface of the lower layer 101 and an upper surface of the mold and/or between the upper surface of the upper layer 103 and a lower surface of the mold. The mold may be constructed of steel, aluminum, or any other material configured to create a cavity of appropriate shape and dimension that will not deform or distort under heat and pressure.

In some examples, the core layer 102 is pre-formed before extending or positioning the core layer 102 in a space between the lower layer 101 and the upper layer 103. Alternatively, elements of the core layer 102 may be positioned as the plies of the lower layer 101 and/or upper layer 103 are laid up. For example, elements of the lower layer 101 may be stacked or placed first, then elements of the core layer 102 may be stacked or placed on top of the elements of the lower layer 101, and then elements of the upper layer 103 may be stacked or placed on top of the elements of the core layer 102.

In some examples, enhanced structural sections 105 are pre-formed. For example, materials for pre-forming an enhanced structural section 105 may be introduced into a mold and cured such that the enhanced structural section 105 has a set of external dimensions defined by its resulting pressure-cured walls. The external dimensions defined by the pressure-cured walls prior to inclusion in the sliding board 100 remain largely unaltered in the finished sliding board 100.

Pre-formed enhanced structural sections 105 may be bonded with each other and/or with solid components 104 prior to assembly with the lower layer 101 and/or upper layer 103. The pre-formed enhanced structural sections 105 and solid components 104 may be bonded while materials of the solid components 104 are being laminated together. Alternatively, the solid components 104 may be pre-formed as well before being bonded with the pre-formed enhanced structural sections 105. In other examples, the solid components 104 are rough cut to an approximation of their final dimensions and are bonded to the pre-formed enhanced structural sections 105, and the resulting bonded structure is machined to appropriate final dimensions.

Components of the sliding board 100 are bonded together using an epoxy, resin, or glue, and cured with time, heat, and/or pressure. Components of the sliding board 100 may be pre-impregnated with resin and/or coated with resin during assembly. Resin may be thermoset or thermoform resin. The molding process may utilize a wet layup (using components pre-impregnated with resin or wetted with resin at the time of use) or a dry layup where resin is drawn into the components once the layup is complete and the mold is sealed (a resin-transfer molding process). Components of the sliding board 100 are pressurized and heated in accordance with the curing requirements of the resin used.

Reinforcements of wood, metal, or high-strength plastic may be used at one or more binding-mounting locations of the sliding board 100. Final construction may include precut reinforcements (in some examples, constructed of high-strength plastic such as ABS, UHMWPE, or phenol) for the tip, tail and sidewalls. Alternate construction of the ski may add or remove any of the tip, tail, or sidewall reinforcements; may add shaped elements of metal including but not limited to aluminum or titanium; may add elastomers or other vibration damping elements such as cork/viscose/etc.; may incorporate viscoelastic damping layers between plies of fabric; or any other such materials as are currently utilized or that may become utilized in sliding board or composite construction. The sliding board may be produced in either a cap or sandwich construction, or a hybrid of the form.

The examples described herein are examples only and are provided to assist in the explanation of the apparatuses, devices, systems and methods described herein. None of the features or components shown in the drawings or discussed herein should be taken as mandatory for any specific implementation of any of these the apparatuses, devices, systems or methods unless specifically designated as mandatory. For ease of reading and clarity, certain components, modules, or methods may be described solely in connection with a specific figure. Any failure to specifically describe a combination or sub-combination of components should not be understood as an indication that any combination or sub-combination is not possible. The features illustrated or described in connection with one non-limiting embodiment may be combined with the features of other non-limiting embodiments. Such modifications and variations are intended to be included within the scope of the present disclosure.

Each feature disclosed in this specification (including any accompanying claims, abstract, and drawings), may be replaced by alternative features having the same, equivalent or similar purpose, unless expressly stated otherwise. Thus, unless expressly stated otherwise, each feature disclosed is one example only of a generic series of equivalent or similar features.

While certain examples have been shown and described herein, those of ordinary skill in the art will understand that the examples described herein and illustrated in the accompanying drawings are non-limiting examples. Numerous variations, changes, and substitutions will be apparent to those skilled in the art without departing from the invention. Accordingly, it is intended that the invention be limited only by the scope of the appended claims.

## Claims

1. A method for producing a sliding board, the method comprising:
bonding one or more solid components with one or more enhanced structural sections to produce a core layer, a first enhanced structural section of the one or more enhanced structural sections including a corrugated medium, the corrugated medium comprising a plurality of flutes extending laterally across a width of the core layer;
extending the core layer between a first layer and a second layer; and
moving one or more of the first layer or the second layer toward the core layer.

2. The method of claim 1, further comprising shaping the one or more solid components such that a first solid component of the one or more solid components defines a channel at a lower face of the first solid component, wherein the first enhanced structural section is within the channel.

3. The method of claim 1, further comprising shaping the one or more solid components such that a first solid component of the one or more solid components defines a channel at a lower face of the first solid component, wherein the first solid component includes a first plurality of flutes at the lower face, and the plurality of flutes of the corrugated medium of the first enhanced structural section complement the first plurality of flutes.

4. The method of claim 1, further comprising forming the one or more enhanced structural sections before the one or more solid components are bonded with the one or more enhanced structural sections.

5. The method of claim 1, further comprising bonding one or more sheets to the corrugated medium to form the first enhanced structural section.

6. The method of claim 1, further comprising coupling one or more plugs to the corrugated medium to form the first enhanced structural section.

7. The method of claim 1, further comprising filling one or more spaces defined by one or more of the flutes of the corrugated medium to form the first enhanced structural section.

8. The method of claim 1, wherein moving one or more of the first layer or the second layer comprises using an external mold to compress the one or more of the first layer or the second layer.

9. The method of claim 8, further comprising extending one or more pressure-exerting elements between an exterior surface of one of the first layer or the second layer and an interior surface of the external mold.

10. A sliding board comprising:
an upper layer;
a lower layer;
a core layer between the upper layer and the lower layer, the core layer comprising one or more solid components and one or more enhanced structural sections bonded to the one or more solid components, a first enhanced structural section including a corrugated medium, wherein the corrugated medium comprises a plurality of flutes extending laterally across a width of the core layer, and an upper surface of the core layer is directly coupled to a lower surface of the upper layer, and a lower surface of the core layer is directly coupled to an upper surface of the lower layer.

11. The sliding board of claim 10, wherein the first enhanced structural section includes one or more sheets bonded to the corrugated medium.

12. The sliding board of claim 10, wherein the first enhanced structural section includes one or more sheets coupled to the corrugated medium, wherein the one or more sheets extend a first distance and the corrugated medium extends a second distance different from the first distance.

13. The sliding board of claim 10, wherein the first enhanced structural section includes one or more plugs coupled to the corrugated medium.

14. The sliding board of claim 10, wherein a first solid component of the one or more solid components defines a channel at a lower face of the first solid component, wherein the first enhanced structural section is within the channel.

15. The sliding board of claim 10, wherein a first solid component of the one or more solid components defines a channel at a lower face of the first solid component, wherein the first solid component includes a first plurality of flutes at the lower face, and the plurality of flutes of the corrugated medium of the first enhanced structural section complement the first plurality of flutes.

## Patentansprüche

1. Verfahren zur Herstellung eines Gleitbrettes, wobei das Verfahren Folgendes aufweist:
Verbinden von einer oder mehreren Festkörperkomponenten mit einer oder mehreren Abschnitten mit verstärkter Struktur, um eine Kernschicht zu erzeugen, wobei ein erster Abschnitt mit verstärkter Struktur von einem oder mehreren der Abschnitte mit verstärkter Struktur ein gewelltes Medium aufweist, wobei das gewellte Medium eine Vielzahl von Rillen aufweist, die sich seitlich über eine Breite der Kernschicht erstrecken;
Ausbreiten der Kernschicht zwischen der ersten Schicht und einer zweiten Schicht; und
Bewegen von einer oder mehreren von der ersten Schicht oder der zweiten Schicht zu der Kernschicht hin.

2. Verfahren nach Anspruch 1, welches weiter aufweist, die eine oder die mehreren Festkörperkomponenten so zu formen, dass eine erste Festkörperkomponente der einen oder mehreren Festkörperkomponenten einen Kanal an einer Unterseite der ersten Festkörperkomponente definiert, wobei der erste Abschnitt mit verstärkter Struktur innerhalb des Kanals ist.

3. Verfahren nach Anspruch 1, welches weiter aufweist, die eine oder die mehreren Festkörperkomponenten so zu formen, dass eine erste Festkörperkomponente der einen oder der mehreren Festkörperkomponenten einen Kanal an einer Unterseite der ersten Festkörperkomponente definiert, wobei die erste Festkörperkomponente eine erste Vielzahl von Rillen an der Unterseite aufweist, und wobei die Vielzahl von Rillen des gewellten Mediums des ersten Abschnittes mit verstärkter Struktur komplementär zu der ersten Vielzahl von Rillen ist.

4. Verfahren nach Anspruch 1, welches weiter aufweist, den einen oder die mehreren Abschnitte mit verstärkter Struktur zu formen, bevor die eine oder die mehreren Festkörperkomponenten mit dem einen oder den mehreren Abschnitten mit verstärkter Struktur verbunden werden.

5. Verfahren nach Anspruch 1, welches weiter aufweist, ein oder mehrere Flächenelemente des gewellten Mediums zu verbinden, um den ersten Abschnitt mit verstärkter Struktur zu formen.

6. Verfahren nach Anspruch 1, welches weiter aufweist, einen oder mehrere Stecker mit dem gewellten Medium zu verbinden, um den ersten Abschnitt mit verstärkter Struktur zu formen.

7. Verfahren nach Anspruch 1, welches weiter aufweist, einen oder mehrere Räume, die durch die eine oder die mehreren Rillen des gewellten Mediums definiert werden, zu füllen, um den ersten Abschnitt mit verstärkter Struktur zu formen.

8. Verfahren nach Anspruch 1, wobei das Bewegen von einer oder mehreren der ersten Schicht oder der zweiten Schicht aufweist, eine äußere Form zu verwenden, um die eine oder die mehreren der ersten Schicht oder der zweiten Schicht zu komprimieren.

9. Verfahren nach Anspruch 8, welches weiter aufweist, ein oder mehrere Druck ausübende Elemente zwischen einer Außenfläche von einer der ersten Schicht oder der zweiten Schicht und einer Innenfläche der äußeren Form auszubreiten bzw. anzuordnen .

10. Gleitbrett, welches Folgendes aufweist:
eine obere Schicht;
eine untere Schicht;
eine Kernschicht zwischen der oberen Schicht und der unteren Schicht, wobei die Kernschicht eine oder mehrere Festkörperkomponenten und einen oder mehrere Abschnitte mit verstärkter Struktur aufweist, die mit der einen oder den mehreren Festkörperkomponenten verbunden sind, wobei ein erster Abschnitt mit verstärkter Struktur ein gewelltes Medium aufweist, wobei das gewellte Medium eine Vielzahl von Rillen aufweist, die sich seitlich über eine Breite der Kernschicht erstrecken, und wobei eine Oberseite der Kernschicht direkt mit einer Unterseite der unteren Schicht gekoppelt ist, und wobei eine Unterseite der Kernschicht direkt mit einer Oberseite der unteren Schicht gekoppelt ist.

11. Gleitbrett nach Anspruch 10, wobei der erste Abschnitt mit verstärkter Struktur ein oder mehrere Flächenelemente aufweist, die mit dem gewellten Medium verbunden sind.

12. Gleitbrett nach Anspruch 10, wobei der erste Abschnitt mit verstärkter Struktur ein oder mehrere Flächenelemente aufweist, die mit dem gewellten Medium verbunden sind, wobei das eine oder die mehreren Flächenelemente sich über eine erste Distanz erstrecken, und wobei das gewellte Medium sich über eine zweite Distanz erstreckt, die sich von der ersten Distanz unterscheidet.

13. Gleitbrett nach Anspruch 10, wobei der erste Abschnitt mit verstärkter Struktur ein oder mehrere Stecker aufweist, die mit dem gewellten Medium verbunden sind.

14. Gleitbrett nach Anspruch 10, wobei eine erste Festkörperkomponente der einen oder mehreren Festkörperkomponenten einen Kanal an einer Unterseite der ersten Festkörperkomponente definiert, wobei der erste Abschnitt mit verstärkter Struktur innerhalb des Kanals ist.

15. Gleitbrett nach Anspruch 10, wobei eine erste Festkörperkomponente der einen oder mehreren Festkörperkomponenten einen Kanal an einer Unterseite der ersten Festkörperkomponente definiert, wobei die erste Festkörperkomponente eine erste Vielzahl von Rillen an der Unterseite aufweist, und wobei die Vielzahl von rillen des gewellten Mediums des ersten Abschnittes mit verstärkter Struktur komplementär zur ersten Vielzahl von Rillen ist.

## Revendications

1. Procédé de fabrication d'une planche de glisse, le procédé comprenant :
le collage d'un ou de plusieurs composants solides à une ou plusieurs sections structurelles renforcées pour produire une couche de coeur, une première section structurelle renforcée des une ou plusieurs sections structurelles renforcées comportant un support ondulé, le support ondulé comprenant une pluralité de cannelures s'étendant latéralement le long d'une largeur de la couche de coeur ;
l'extension de la couche de coeur entre une première couche et une deuxième couche ; et
le déplacement d'une ou de plusieurs parmi la première couche et la deuxième couche vers la couche de coeur.

2. Procédé selon la revendication 1, comprenant en outre la mise en forme des un ou plusieurs composants solides de sorte qu'un premier composant solide parmi les un ou plusieurs composants solides définisse un canal au niveau d'une face inférieure du premier composant solide, dans lequel la première section structurelle renforcée est à l'intérieur du canal.

3. Procédé selon la revendication 1, comprenant en outre la mise en forme des un ou plusieurs composants solides de sorte qu'un premier composant solide parmi les un ou plusieurs composants solides définisse un canal au niveau d'une face inférieure du premier composant solide, dans lequel le premier composant solide comporte une première pluralité de cannelures au niveau de la face inférieure, et la pluralité de cannelures du support ondulé de la première section structurelle renforcée est complémentaire de la première pluralité de cannelures.

4. Procédé selon la revendication 1, comprenant en outre la formation des une ou plusieurs sections structurelles renforcées avant que les un ou plusieurs composants solides ne soient collés aux une ou plusieurs sections structurelles renforcées.

5. Procédé selon la revendication 1, comprenant en outre le collage d'une ou de plusieurs feuilles au support ondulé pour former la première section structurelle renforcée.

6. Procédé selon la revendication 1, comprenant en outre le couplage d'un ou de plusieurs plots au support ondulé pour former la première section structurelle renforcée.

7. Procédé selon la revendication 1, comprenant en outre le remplissage d'un ou de plusieurs espaces définis par une ou plusieurs des cannelures du support ondulé pour former la première section structurelle renforcée.

8. Procédé selon la revendication 1, dans lequel le déplacement d'une ou de plusieurs parmi la première couche et la deuxième couche comprend l'utilisation d'un moule externe pour comprimer les une ou plusieurs parmi la première couche ou la deuxième couche.

9. Procédé selon la revendication 8, comprenant en outre l'extension d'un ou de plusieurs éléments exerçant une pression entre une surface extérieure d'une parmi la première couche ou la deuxième couche et une surface intérieure du moule externe.

10. Planche de glisse comprenant :
une couche supérieure ;
une couche inférieure ;
une couche de coeur entre la couche supérieure et la couche inférieure, la couche de coeur comprenant un ou plusieurs composants solides et une ou plusieurs sections structurelles renforcées collées aux un ou plusieurs composants solides, une première section structurelle renforcée comportant un support ondulé, dans laquelle le support ondulé comprend une pluralité de cannelures s'étendant latéralement le long d'une largeur de la couche de coeur, et une surface supérieure de la couche de coeur est directement reliée à une surface inférieure de la couche supérieure, et une couche inférieure de la couche de coeur est directement reliée à une surface supérieure de la couche inférieure.

11. Planche de glisse selon la revendication 10, dans laquelle la première section structurelle renforcée comporte une ou plusieurs feuilles collées au support ondulé.

12. Planche de glisse selon la revendication 10, dans laquelle la première section structurelle renforcée comporte une ou plusieurs feuilles reliées au support ondulé, dans laquelle les une ou plusieurs feuilles s'étendent sur une première distance et le support ondulé s'étend sur une deuxième distance différente de la première distance.

13. Planche de glisse selon la revendication 10, dans laquelle la première section structurelle renforcée comporte un ou plusieurs plots reliés au support ondulé.

14. Planche de glisse selon la revendication 10, dans laquelle un premier composant solide parmi les un ou plusieurs composants solides définit un canal au niveau d'une face inférieure du premier composant solide, dans laquelle la première section structurelle renforcée est à l'intérieur du canal.

15. Planche de glisse selon la revendication 10, dans laquelle un premier composant solide parmi les un ou plusieurs composants solides définit un canal au niveau d'une face inférieure du premier composant solide, dans laquelle le premier composant solide comporte une première pluralité de cannelures au niveau de la face inférieure, et la pluralité de cannelures du support ondulé de la première section structurelle renforcée est complémentaire de la première pluralité de cannelures.
